# EUROPEAN PATENT SPECIFICATION

(11) **EP 3 310 028 B1**
(45) Date of publication and mention of the grant of the patent: **03.07.2024**
(21) Application number: 17196642.7
(22) Date of filing: 16.10.2017
(51) Int. Cl.: H04M 3/22, H04M 1/24, H04M 3/26, H04W 24/06

(54) **SYSTEM, METHOD AND DEVICE FOR TESTING CALL QUALITY**
SYSTEM, VERFAHREN UND VORRICHTUNG ZUM TESTEN DER ANRUFQUALITÄT
SYSTÈME, MÉTHODE ET DISPOSITIF POUR TESTER LA QUALITÉ D'UN APPEL

(30) Priority: 17.10.2016 CN 201610903634
(43) Date of publication of application: 18.04.2018
(73) Proprietor: Beijing Xiaomi Mobile Software Co., Ltd., Beijing 100085 (CN)
(72) Inventor: YEN, Chiafu, Beijing 100085 (CN); HU, Penglong, Beijing 100085 (CN); XIONG, Dawei, Beijing 100085 (CN)
(74) Representative: dompatent von Kreisler Selting Werner - Partnerschaft von Patent- und Rechtsanwälten mbB

(56) References cited:
- US-A1- 2008 292 113
- US-A1- 2012 128 134
- US-A1- 2013 286 860
- US-A1- 2016 261 737

## Description

### TECHNICAL FIELD

The present disclosure relates to terminal technical fields, and more particularly, to a system, a method and a device for testing call quality.

### BACKGROUND

As the development of communication technologies, the call quality desired by users becomes higher and higher. Thus, it is needed to develop test communication devices for discovering possible problems associated with the call quality.

US2016261737 A1 discloses a communication system comprising a communication terminal apparatus and a voice communication quality evaluation system capable of communicating with the communication terminal apparatus via communication networks.

US2012128134 A1 relates to systems, methods, and computer program products for testing a voice communication system.

US 2008/292113 A1 discloses methods and apparatus for tuning the audio path response of an audio device.

US 2013/286860 A1 discloses an automated method for testing audio signal quality of cell phone transmissions providing a Mean Opinion Score (MOS) output using inexpensive test components.

### SUMMARY

The present disclosure provides a system, a method and a device for testing call quality.

The present invention is defined by the appended claims. Further aspects of the present invention are defined in the dependent claims.

It should be understood that general descriptions above and detailed descriptions below are merely illustrative and explanatory without limiting the present disclosure.

### BRIEF DESCRIPTION OF DRAWINGS

The accompanying drawings herein, which are incorporated in and constitute a part of this specification, illustrate examples consistent with the present disclosure and serve to explain the principles of the present disclosure together with the specification.
FIG. 1 is a schematic diagram illustrating a structure of a system for testing call quality according to an example of the present disclosure.
FIG. 2 is a flowchart illustrating a method of testing call quality according to an example of the present disclosure.
FIG. 3 is a schematic diagram illustrating a process of testing call quality according to an example of the present disclosure.
FIG. 4 is a schematic diagram illustrating another process of testing call quality according to an example of the present disclosure.
FIGS. 5-6 are schematic diagrams illustrating structures of apparatuses for testing call quality according to examples of the present disclosure.
FIG. 7 is a schematic diagram illustrating a structure of a device for testing call quality according to an example of the present disclosure.

Skilled artisans will appreciate that elements in the figures are illustrated for simplicity and clarity and have not necessarily been drawn to scale. For example, the dimensions and/or relative positioning of some of the elements in the figures may be exaggerated relative to other elements to help to improve understanding of various examples of the present disclosure. Also, common but well-understood elements that are useful or necessary in a commercially feasible example are often not depicted in order to facilitate a less obstructed view of these various examples. It will further be appreciated that certain actions and/or steps may be described or depicted in a particular order of occurrence while those skilled in the art will understand that such specificity with respect to sequence is not actually required. It will also be understood that the terms and expressions used herein have the ordinary technical meaning as is accorded to such terms and expressions by persons skilled in the technical field as set forth above, except where different specific meanings have otherwise been set forth herein.

### DETAILED DESCRIPTION

Example embodiments will be described in detail herein with the examples thereof expressed in the drawings. When the following descriptions involve the drawings, like numerals in different drawings represent like or similar elements unless stated otherwise. The implementations described in the following example embodiments do not represent all implementations consistent with the present disclosure. On the contrary, they are examples of a device and a method consistent with some aspects of the present disclosure described in detail in the appended claims.

The terminology used in the present disclosure is for the purpose of describing exemplary examples only and is not intended to limit the present disclosure. As used in the present disclosure and the appended claims, the singular forms "a," "an" and "the" are intended to include the plural forms as well, unless the context clearly indicates otherwise. It shall also be understood that the terms "or" and "and/or" used herein are intended to signify and include any or all possible combinations of one or more of the associated listed items, unless the context clearly indicates otherwise.

It shall be understood that, although the terms "first," "second," "third," and the like may be used herein to describe various information, the information should not be limited by these terms. These terms are only used to distinguish one category of information from another. For example, without departing from the scope of the present disclosure, first information may be termed as second information; and similarly, second information may also be termed as first information. As used herein, the term "if" may be understood to mean "when" or "upon" or "in response to" depending on the context.

References throughout this specification to "one embodiment," "an embodiment," "exemplary embodiment," or the like in the singular or plural means that one or more particular features, structures, or characteristics described in connection with an example is included in at least one embodiment of the present disclosure. Thus, the appearances of the phrases "in one embodiment," "in an embodiment," "in an exemplary embodiment," or the like in the singular or plural in various places throughout this specification are not necessarily all referring to the same embodiment. Furthermore, the particular features, structures, or characteristics in one or more embodiments may be combined in any suitable manner.

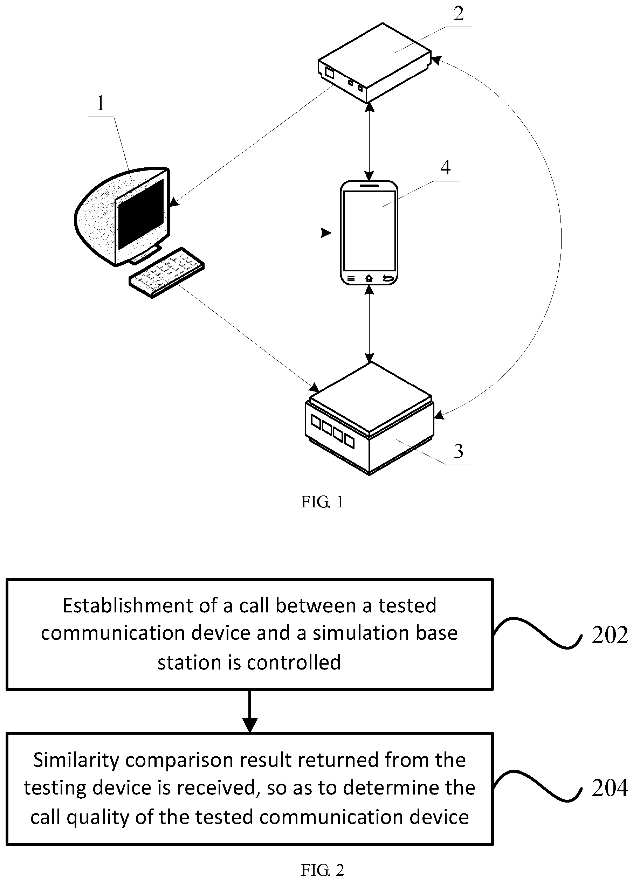

FIG. 1 is a schematic diagram illustrating a system for testing call quality according to an example of the present disclosure. As shown in FIG. 1, the testing system may include: a control device 1, a testing device 2, a simulation base station 3, a tested communication device 4 and the like. According to examples of the present disclosure, the control device 1 controls the simulation base station 3 and/or the tested communication device 4. An efficient call quality test can be achieved by performing data interaction and processing among the testing device 2, the simulation base station 3 and the tested communication device 4.

The control device 1 may be an electronic device with a control function, such as a PC device, a server or the like. The testing device 2 may be a Mean Opinion Score (MOS) device which can express the call quality by calculating an MOS value. Alternatively, the call quality test may be implemented by using another parameter or device. The simulation base station 3 may be a Comprehensive Measurement Unit (CMU) or the like. The tested communication device 4 may be an electronic device with a call function, such as a mobile phone, a tablet device, or the like, where the call quality of the electronic device with the call function may be tested according to the technical solutions in the present disclosure.

FIG. 2 is a flowchart illustrating a method of testing call quality according to an example of the present disclosure. As shown in FIG. 2, the method may apply to the control device 1, which includes procedures as follows.

At block 202, it is controlled to establish a call between the tested communication device 4 and the simulation base station 3.

In the example, the control device 1 may transmit a call instruction to any party (hereinafter referred to as a first device) of the tested communication device 4 and the simulation base station 3 in a way that the first device originates the call to the other party (hereinafter referred to as a second device) of the tested communication device 4 and the simulation base station 3, where the second device is pre-configured to be under an automatic answering mode. Thus, the call is established between the tested communication device 4 and the simulation base station 2.

In the example, the testing device 2 may provide a standard audio to any party (hereinafter referred to as a third device) of the tested communication device 4 and the simulation base station 3 after the call is established. For example, the simulation base station 3 may transmit a notification message to the testing device 2 after the call is established, so that the testing device 2 provides the standard audio to the third device.

The standard audio is processed to be a test audio by the tested communication device 4 during a transmission process via the call from the third device to the other party of the tested communication device 4 and the simulation base station 3 (hereinafter referred to as a fourth device), and the test audio is returned to the testing device 2 by the fourth device, so that the testing device 2 performs similarity comparison for the test audio and the standard audio.

It should to be noted that, the process that the control device 1 transmits the call instruction to the first device and the process that the testing device 2 provides the standard audio to the third device are independent from each other, the first device may be same as or different from the third device.

When the third device is the tested communication device 4, the testing device 2 may play the standard audio for the tested communication device 4. In this case, the tested communication device 4 may obtain the test audio by performing acquisition for the played standard audio through a built-in microphone or an external microphone. When the third device is the simulation base station 3, the testing device 2 transmits the standard audio to the simulation base station 3. In this case, the simulation base station 3 transmits the standard audio as a call voice to the tested communication device 4, and the tested communication device 4 obtains the test audio by performing acquisition for the standard audio.

It should be understood that the standard audio is the audio data which is not processed by the tested communication device 4, and the test audio is the audio data which has been processed by the tested communication device 4. Further, a communication network can be established between the tested communication device 4 and the simulation base station 3 by configuring the simulation base station 3, so as to avoid that the quality of the test audio is influenced by network environment factors in a communication process. In other words, it can be ensured that a quality condition of the test audio is only related to the call quality of the tested communication device 4, thereby improving call quality test accuracy.

At block 204, the similarity comparison result returned from the testing device 2 is received, so as to determine the call quality of the tested communication device 4.

In the example, the call quality is positively correlated to a similarity between the test audio and the standard audio. For example, when the call quality of the tested communication device 4 is higher, the standard audio is changed less by the tested communication device 4 in a way that the similarity between the test audio and the corresponding standard audio is higher. On the contrary, when the similarity between the test audio and the standard audio is lower, it is indicated that the call quality of the tested communication device 4 is lower.

As can be seen from examples above, the call operation is performed by using the simulation base station according to the present disclosure in a way that a stable network environment can be continuously provided, an influence of a network instability factor for a test result can be eliminated, and an efficient call quality test can be implemented. Further, the control device controls the testing device, the simulation base station and the tested communication device in a way that the three can automatically cooperate with each another. Thus, the call quality of the tested communication device can be automatically tested, and call quality testing efficiency for the tested communication device can be further effectively improved.

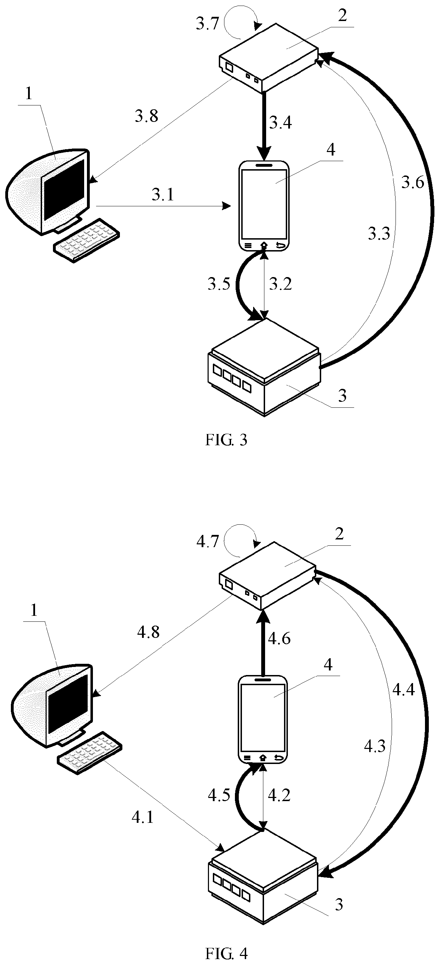

FIG. 3 is a schematic diagram illustrating a process of testing call quality according to an example of the present disclosure. As shown in FIG. 3, the process of testing call quality includes procedures as follows.

At process 3.1, the control device 1 transmits a call instruction to the tested communication device 4.

In the example, a connection may be established between the control device 1 and the tested communication device 4 through a physical line or through a wireless way, and the above-mentioned call instruction is transmitted via the connection. For example, the physical line may be a USB cable or the like. The wireless connection may be established based on Bluetooth, WIFI, or the like.

At process 3.2, in response to the call instruction, the tested communication device 4 establishes a call with the simulation base station 3.

In the example, the tested communication device 4 may originate a call to the simulation base station 3, and the simulation base station 3 may be pre-configured to be under an automatic answering mode, so that the simulation base station 3 may automatically answer the call in response to the call from the tested communication device 4 to establish the call connection between the tested communication device 4 and the simulation base station 3.

At process 3.3, the simulation base station 3 may transmit a notification message to the testing device 2 after the call connection is established with the tested communication device 4.

In the example, similar as the connection established between the control device 1 and the tested communication device 4, a wired or wireless connection may further be established between the simulation base station 3 and the testing device 2, which is not repeatedly described herein.

At process 3.4, the testing device 2 transmits a standard audio to the tested communication device 4.

In an example, the testing device 2 plays the standard audio through a loudspeaker or the like, and the tested communication device 4 generates the corresponding test audio by performing audio acquisition for the standard audio through a microphone. The process may be employed to simulate a scenario that a user directly performs a voice call based on the microphone on the tested communication device 4.

In another example, a headphone with a microphone may be inserted into a headphone jack of the tested communication device 4, and the microphone on the headphone performs audio acquisition for the standard audio played by the testing device 2 in a way that the standard audio is inputted to the tested communication device 4. The tested communication device 4 processes the standard audio to be the test audio.

In the example, the process that the tested communication device 4 generates the test audio based on the standard audio is actually a process that a digital audio signal is generated based on an analog audio signal through an analog-to-digital conversion. In the analog-to-digital conversion process, any improper operation likely causes that original data is lost and noise is added in a way that the actual call quality is influenced. In examples of the present disclosure, any possible call quality problem of the tested communication device 4 is expected to be detected by simulating the actual call process, thereby the call quality problem can be discovered and solved quickly.

At process 3.5, the tested communication device 4 transmits the test audio to the simulation base station 3.

In the example, after the tested communication device 4 establishes the call connection with the simulation base station 3, it is equivalent to establishing a data connection between tested communication device 4 and the simulation base station 3, and the transmission operation for data such as the test audio may be implemented via the data connection. The data connection may be based on a circuit switched domain or a packet switched domain or other data connection means, which is not limited herein.

At process 3.6, the simulation base station 3 transmits the test audio to the testing device 2.

In the example, the process that the simulation base station 3 receives and transmits the test audio are completely based on a digital signal transmitting process during which no analog-to-digital conversion operation is performed, thus, the data of the test audio is not changed, and data integrity and test accuracy for the test audio is not affected.

At process 3.7, the testing device 2 compares the test audio with the standard audio to obtain a test result.

At process 3.8, the testing device 2 outputs the test result to the control device 1.

In the example, when the testing device 2 is an MOS device, the testing device 2 may calculate an MOS corresponding to the test audio based on the standard audio, and determine the call quality of the tested communication device 4 based on the MOS. For example, when the calculated MOS is high, it is indicated that a similarity between the test audio and the standard audio is high, and the call quality of the tested communication device 4 is high. On the contrary, when the calculated MOS is low, it is indicated that the similarity between the test audio and the standard audio is low, and the call quality is low.

In the example, after the testing device 2 outputs the test result to the control device 1, the control device 1 may display the test result on a display screen. Alternatively, the control device 1 may output the corresponding test result via the display screen for a user to view only when the test result indicates that the call quality is lower than a preset quality standard or another pre-determined threshold.

Sometimes, the testing device may generate a standard audio that also includes data message in addition to the audio. For example, the standard audio may include a short message. Thus, the tested communication device may receive the standard audio that includes data message and the audio and generate the test data that also include data message and audio. The comparison between the standard audio and the test audio may also include the comparisons of the data message included in the standard audio and the test audio.

Sometimes, the standard audio may include the data message only. In this case, the test audio generated by the tested communication device may also include the data message only. The comparison between the standard audio and the test audio may compare the data message included in the standard audio and the test audio.

FIG. 4 is a schematic diagram illustrating another process of testing call quality according to an example of the present disclosure. As shown in FIG. 4, the process of testing call quality include procedures as follows:

At process 4.1, the control device 1 transmits a call instruction to the simulation base station 3.

In the example, a connection may be established between the control device 1 and the simulation base station 3 through a physical line or through a wireless way, and the above-mentioned call instruction is transmitted via the connection. For example, the physical line may be a USB cable or the like. The wireless connection may be established based on Bluetooth, WIFI or the like.

At process 4.2, in response to the call instruction, the simulation base station 3 establishes a call connection with the tested communication device 4.

In the example, the simulation base station 3 may originate a call operation to the tested communication device 4, and the tested communication device 4 may be pre-configured to be under an automatic answering mode in a way that the tested communication device 4 can automatically answer the call in response to the call operation of the simulation base station 3 to establish the call between the tested communication device 4 and the simulation base station 3.

It should to be noted that, in the example shown in FIG. 4, a call may be established between the simulation base station 3 and the tested communication device 4 by executing procedures in processes 3.1 and 3.2 shown in FIG. 3 to replace processes 4.1 and 4.2 herein; similarly, processes 4.1 and 4.2 herein may further be used in the example shown in FIG. 3 to replace processes 3.1 and 3.2 to establish the call between the simulation base station 3 and the tested communication device 4.

At process 4.3, the simulation base station 3 transmits a notification message to the testing device 2 after the call is established.

In the example, similar as the connection established between the control device 1 and the tested communication device 4, the wired or wireless connection may further be established between the simulation base station 3 and the testing device 2, which is not repeatedly described herein.

At process 4.4, the testing device 2 transmits the standard audio to the simulation base station 3.

At process 4.5, the simulation base station 3 forwards the standard audio to the tested communication device 4.

In the example, the process that the simulation base station 3 receives and transmits the standard audio are completely based on a digital signal transmitting process during which no analog-to-digital conversion operation is performed, thus, the data of the standard audio is not changed, and data integrity and test accuracy for the standard audio is not affected.

The tested communication device 4 processes the standard audio to be the test audio and transmits the test audio to the testing device 2 in a way that the testing device 2 obtains the test audio.

In the example, the tested communication device 4 may process the standard audio to be an analog signal through digital-to-analog conversion and play the analog signal through a loudspeaker or a headphone receiver connected with the tested communication device 4, and the testing device 2 obtains the test audio by performing audio acquisition.

In the example, the process that the tested communication device 4 performs digital-to-analog conversion is actually a process that the digital audio signal is converted to an analog audio signal. Any improper operation likely causes that original data is lost and noise is added in a way that the actual call quality is influenced. In examples of the present disclosure, any possible call quality problem of the tested communication device 4 is expected to be detected by simulating the actual call process, thereby the call quality problem can be discovered and solved soon.

The testing device 2 compares the test audio with the standard audio to obtain a corresponding test result.

The testing device 2 outputs the test result to the control device 1.

In the example, procedures in processes 4.7 and 4.8 are similar as those in processes 3.7 and 3.8 as shown in FIG. 3, which is not repeatedly described herein.

Under the control of the control device 1, the testing device 2, the simulation base station 3 and the tested communication device 4 can automatically cooperate with one another, thereby achieving a fast, efficient and automatic call quality test for the tested communication device 4. Further, a simulation network may be created through the simulation base station 3 to implement the call connection with the tested communication device 4, thus, the problems such as that a test is inaccurate due to instability of an external communication network can be avoided, call quality testing accuracy can be significantly improved.

Corresponding to the aforementioned methods of testing call quality according to examples of the present disclosure, devices for testing call quality according to the present disclosure are described below.

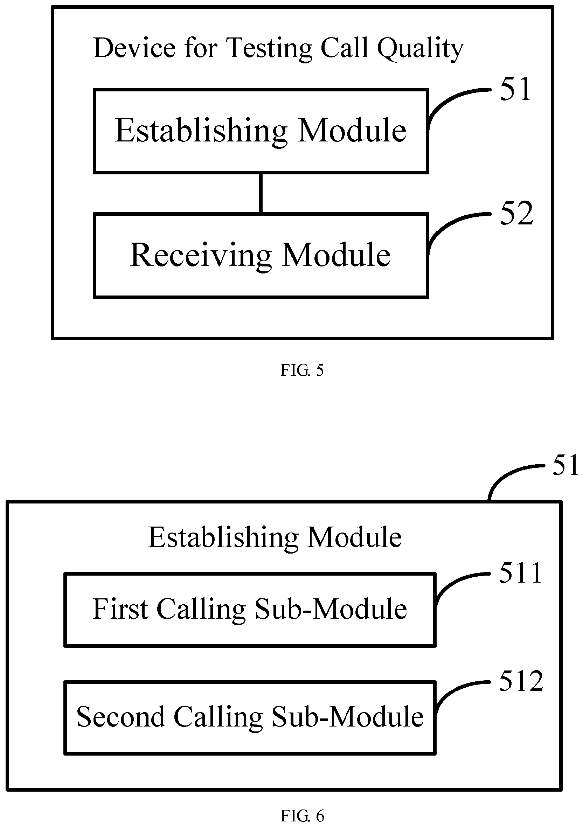

FIG. 5 is a schematic diagram illustrating a structure of an apparatus for testing call quality according to an example of the present disclosure. Referring to FIG. 5, the apparatus includes an establishing module 51 and a receiving module 52.

The establishing unit 51 may be configured to control the establishment of a call between a tested communication device and a simulation base station, where a testing device provides a standard audio to any party of the tested communication device and the simulation base station after the call is established; the standard audio is processed by the tested communication device to be a test audio during a transmission process via the call, and the test audio is returned to the testing device in a way that the testing device performs similarity comparison for the test audio and the standard audio to obtain a similarity comparison result which expresses the call quality of the tested communication device.

The receiving module 52 may be configured to receive the similarity comparison result returned by the testing device to determine the call quality of the tested communication device.

FIG. 6 is a schematic diagram illustrating a structure of another apparatus for testing call quality according to an example of the present disclosure. Based on the structure shown in FIG. 5, the establishing module 51 may include a first calling sub-module 511 or a second calling sub-module 512.

The first calling sub-module 511 may be configured to control the tested communication device to originate a call to the simulation base station, wherein the simulation base station may be configured to be under an automatic answering mode.

The second calling sub-module 511 may be configured to control the simulation base station to originate a call to the tested communication device, where the tested communication device may be configured to be under an automatic answering mode.

In an example, the call quality is positively correlated to a similarity between the test audio and the standard audio.

Regarding the apparatuses in the examples above, specific manners in which different modules perform operations have already been described in detail in the examples related to the methods, which is not repeatedly described in detail herein.

Since apparatus examples substantially correspond to method examples, related parts for the apparatuses can refer to descriptions for the method example. The apparatus examples described above are merely illustrative, where the modules described as separate members may be or not be physically separated, and the members displayed as units may be or not be physical units, i.e., may be located in one place, or may be distributed to a plurality of network units. Part or all of the modules may be selected according to actual requirements to implement the objectives of the solutions in the embodiments. Those of ordinary skill in the art may understand and carry out them without creative work.

Correspondingly, the present disclosure further provides a device for testing call quality. The device includes: a processor, and a non-transitory machine-readable storage medium storing machine executable instructions which are executable by the processor to: control establishment of a call between a tested communication device and a simulation base station where a testing device provides a standard audio to any party of the tested communication device and the simulation base station after the call is established, and the standard audio is processed by the tested communication device to be a test audio during a transmission process via the call, and the test audio is returned to the testing device in a way that the testing device performs similarity comparison for the test audio and the standard audio to obtain a similarity comparison result which expresses the call quality of the tested communication device; and receive the similarity comparison result returned by the testing device to determine the call quality of the tested communication device.

Correspondingly, the present disclosure further provides an electronic device. The electronic device includes a machine-readable storage medium and one or more programs, where the one or more programs are stored in the machine-readable storage medium. The one or more programs includes instructions which can be invoked and executed by the one or more processors to: control establishment of a call between a tested communication device and a simulation base station where a testing device provides a standard audio to any party of the tested communication device and the simulation base station after the call is established, and the standard audio is processed by the tested communication device to be a test audio during a transmission process via the call, and the test audio is returned to the testing device in a way that the testing device performs similarity comparison for the test audio and the standard audio to obtain a similarity comparison result which expresses the call quality of the tested communication device; and receive the similarity comparison result returned by the testing device to determine the call quality of the tested communication device.

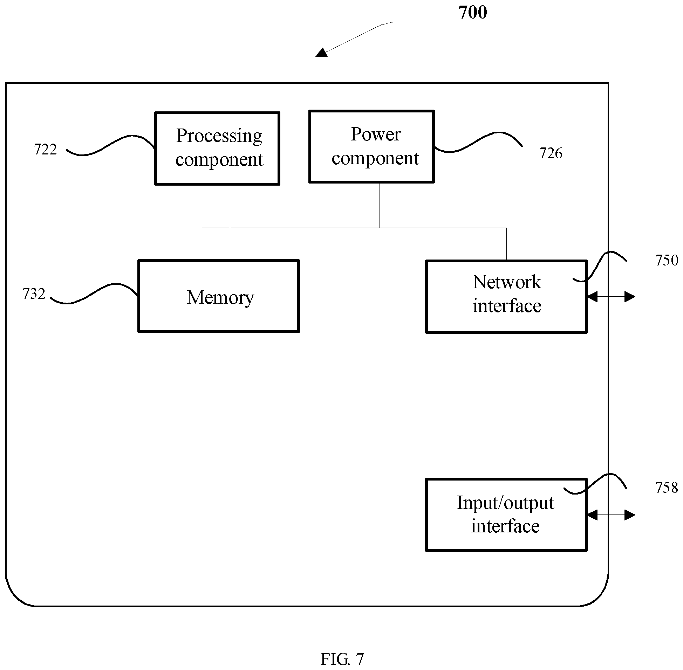

FIG. 7 is a schematic diagram illustrating a device 700 for testing call quality according to an example of the present disclosure. For example, the device 700 may be provided as a server. Referring to FIG. 7, the device 700 includes a processing component 722 which includes one or more processors, and a memory resource represented by a memory 732 storing instructions which can be invoked and executed by the processing component 722, e.g., application programs. The application programs stored in the memory 732 may include one or more modules respectively corresponding to a group of instructions.

The apparatus 700 may further include a power component 726 configured to execute power management for the device 700, a wired or wireless network interface 750 configured to connect the device 700 to a network, and an Input/Output (I/O) interface 758. The device 700 may be operated based on an operating system stored in the memory 732, such as Windows ServerTM, Mac OS XTM, UnixTM, LinuxTM, FreeBSDTM or the like.

The present disclosure may include dedicated hardware implementations such as application specific integrated circuits, programmable logic arrays and other hardware devices. The hardware implementations can be constructed to implement one or more of the methods described herein. Applications that may include the apparatus and systems of various examples can broadly include a variety of electronic and computing systems. One or more examples described herein may implement functions using two or more specific interconnected hardware modules or devices with related control and data signals that can be communicated between and through the modules, or as portions of an application-specific integrated circuit. Accordingly, the computing system disclosed may encompass software, firmware, and hardware implementations. The terms "module," "sub-module," "circuit," "sub-circuit," "circuitry," "sub-circuitry," "unit," or "sub-unit" may include memory (shared, dedicated, or group) that stores code or instructions that can be executed by one or more processors.

It would be easy for a person skilled in the art to conceive of other embodiments of the present disclosure after considering the description and practicing the disclosure herein. The present disclosure is intended to encompass any variations and use or adaptive changes of the present disclosure. These variations, uses or adaptive changes follow the general principles of the present disclosure and include the common general knowledge or customary technical means in the technical field that are not disclosed herein. The specification and the embodiments are merely illustrative, and the real scope of the present disclosure are defined by the appended claims.

It shall be understood that the present disclosure is not limited to the exact structures as described above and depicted in the drawings, and various modifications and alterations may be made thereto without departing from the scope of the present disclosure. The scope of the present disclosure is just limited by the appended claims.

## Claims

1. A system for testing call quality, comprising:
a simulation base station (3);
a tested communication device (4);
a control device (1), configured to transmit a call instruction to the tested communication device (4) such that a call between the tested communication device (4) and the simulation base station (3) is established;
a testing device (2), configured to:
provide a standard analog audio to the tested communication device (4) after the call is established between the tested communication device (4) and the simulation base station (3), wherein the standard analog audio becomes a test audio after it is processed by the tested communication device (4) and the test audio is transmitted to the simulation base station (3) during a transmission process via the call, and the test audio is sent back to the testing device (2) by the simulation base station (3), and the test audio is not changed during the transmission process; and
perform a similarity comparison between the test audio and the standard analog audio to obtain a similarity comparison result, wherein the similarity comparison result shows the call quality of the tested communication device (4),
wherein the tested communication device (4) is configured to originate the call to the simulation base station (3) in response to the call instruction, and the simulation base station (3) is configured to enter an automatic answering mode.

2. The system of claim 1, wherein:
the simulation base station (3) is configured to transmit a notification message to the testing device (2) after the call is established; and
the testing device (2) is configured to provide the standard audio to the tested communication device (4) in response to the notification message.

3. The system of claim 1, wherein
the tested communication device (4) is configured to obtain the test audio by using a built-in microphone or an external microphone when the testing device (2) plays the standard audio.

4. The system of claim 1, wherein
the tested communication device (4) is configured to process the received standard audio and turn the standard audio to be the test audio.

5. The system of claim 1, wherein the similarity comparison result is a Mean Opinion Score, MOS, when the testing device is a MOS testing device.

6. A method of testing call quality, comprising:
establishing a call between a tested communication device (4) and a simulation base station (3);
providing, by a testing device (2), a standard analog audio to the tested communication device (4) after the call is established between the tested communication device (4) and the simulation base station (3);
processing the standard analog audio and turning the standard analog audio to be a test audio and transmitting the test audio to the simulation base station (3) by using the tested communication device (4) during a transmission process via the call, and sending the test audio back to the testing device (2) by the simulation base station (3), wherein the test audio is not changed during the transmission process;
performing, by the testing device (2), a similarity comparison between the test audio and the standard audio to obtain a similarity comparison result wherein the similarity comparison result shows the call quality of the tested communication device (4); and
receiving the similarity comparison result from the testing device (2) to determine the call quality of the tested communication device (4),
wherein establishing the call between the tested communication device (4) and the simulation base station (3) further comprises:
controlling the tested communication device (4) to originate the call to the simulation base station (3), wherein the simulation base station (3) is configured to enter an automatic answering mode.

7. The method of claim 6, wherein the call quality is correlated to a similarity between the test audio and the standard audio.

8. A control device (1) capable of controlling a test system comprising a simulation base station (3), a tested communication device (4), a testing device (2) and the control device (1), comprizing:
a processor (722), and
a non-transitory machine-readable storage medium (732) storing machine executable instructions, wherein the machine executable instructions are executable by the processor and cause the processor to:
control (202) to establish a call between the tested communication device (4) and the simulation base station (3), wherein the call is capable of being used to transmit test audio to the simulation base station (3) by the tested communication device (4), wherein the test audio is obtained by processing the standard analog audio provided by the testing device (2) with tested communication device (4); and
receive (204) the similarity comparison result returned by the testing device (2) to determine the call quality of the tested communication device (4), wherein,
the machine-executable instructions further cause the processor to:
control the tested communication device (4) to originate the call to the simulation base station (3), wherein the simulation base station (3) is configured to enter an automatic answering mode.

9. The control device of claim 8, wherein the call quality is correlated to a similarity between the test audio and the standard audio.

## Patentansprüche

1. System zum Testen einer Anrufqualität, das aufweist:
eine Simulationsbasisstation (3);
eine getestete Kommunikationsvorrichtung (4);
eine Steuervorrichtung (1), die dazu ausgebildet ist, einen Anrufbefehl an die getestete Kommunikationsvorrichtung (4) zu übertragen, so dass ein Anruf zwischen der getesteten Kommunikationsvorrichtung (4) und der Simulationsbasisstation (3) getätigt wird;
eine Testvorrichtung (2), die für Folgendes ausgebildet ist:
Bereitstellen eines Standard-Analog-Audios für die getestete Kommunikationsvorrichtung (4), nachdem der Anruf zwischen der getesteten Kommunikationsvorrichtung (4) und der Simulationsbasisstation (3) getätigt wurde, wobei das Standard-Analog-Audio zu einem Test-Audio wird, nachdem es von der getesteten Kommunikationsvorrichtung (4) verarbeitet wurde, und wobei das Test-Audio während eines Übertragungsvorgangs über den Anruf an die Simulationsbasisstation (3) übertragen wird, und wobei das Testaudio von der Simulationsbasisstation (3) zurück an die Testvorrichtung (2) gesendet wird, und wobei das Test-Audio während des Übertragungsvorgangs nicht geändert wird; und
Durchführen eines Ähnlichkeitsvergleichs zwischen dem Test-Audio und dem Standard-Analog-Audio, um ein Ähnlichkeitsvergleichsergebnis zu erhalten, wobei das Ähnlichkeitsvergleichsergebnis die Anrufqualität der getesteten Kommunikationsvorrichtung (4) anzeigt,
wobei die getestete Kommunikationsvorrichtung (4) dazu ausgebildet ist, den Anruf an die Simulationsbasisstation (3) als Reaktion auf den Anrufbefehl auszulösen, und die Simulationsbasisstation (3) so ausgebildet ist, dass sie in einen automatischen Anrufbeantwortungsmodus eintritt.

2. System nach Anspruch 1, wobei die Simulationsbasisstation (3) dazu ausgebildet ist, eine Benachrichtigungsmeldung an die Testvorrichtung (2) zu übertrage, nachdem der Anruf getätigt wurde; und
die Testvorrichtung (2) dazu ausgebildet ist, das Standard-Audio für die getestete Kommunikationsvorrichtung (4) als Reaktion auf die Benachrichtigungsmeldung bereitzustellen.

3. System nach Anspruch 1, wobei die getestete Kommunikationsvorrichtung (4) dazu ausgebildet ist, das Test-Audio unter Verwendung eines eingebauten Mikrofons oder eines externen Mikrofons zu erhalten, wenn die Testvorrichtung (2) das Standard-Audio abspielt.

4. System nach Anspruch 1, wobei die getestete Kommunikationsvorrichtung (4) dazu ausgebildet ist, das empfangene Standard-Audio zu verarbeiten und das Standard-Audio als Test-Audio einzustellen.

5. System nach Anspruch 1, wobei das Ähnlichkeitsvergleichsergebnis ein Mean Opinion Score, MOS, ist, wenn die Testvorrichtung eine MOS-Testvorrichtung ist.

6. Verfahren zum Testen einer Anrufqualität, das umfasst:
Tätigen eines Anrufs zwischen einer getesteten Kommunikationsvorrichtung (4) und einer Simulationsbasisstation (3);
Bereitstellen, mittels einer Testvorrichtung (2), eines Standard-Analog-Audios für die getestete Kommunikationsvorrichtung (4), nachdem der Anruf zwischen der getesteten Kommunikationsvorrichtung (4) und der Simulationsbasisstation (3) getätigt wurde;
Verarbeiten des Standard-Analog-Audios und Einstellen des Standard-Analog-Audios als Test-Audio, und Übertragen des Test-Audios an die Simulationsbasisstation (3) unter Verwendung der getesteten Kommunikationsvorrichtung (4) während eines Übertragungsvorgangs über das Telefon, und Zurückenden des Test-Audios an die Testvorrichtung (2) mittels der Simulationsbasisstation (3), wobei das Test-Audio während des Übertragungsvorgangs nicht geändert wird;
Durchführen, mittels der Testvorrichtung (2), eines Ähnlichkeitsvergleichs zwischen dem Test-Audio und dem Standard-Audio, um ein Ähnlichkeitsvergleichsergebnis zu erhalten, wobei das Ähnlichkeitsvergleichsergebnis die Anrufqualität der getesteten Kommunikationsvorrichtung (4) anzeigt; und Empfangen des Ähnlichkeitsvergleichsergebnisses von der Testvorrichtung (2), um die Anrufqualität der getesteten Kommunikationsvorrichtung (4) zu bestimmen,
wobei das Tätigen des Anrufs zwischen der getesteten Kommunikationsvorrichtung (4) und der Simulationsbasisstation (3) ferner umfasst:
Steuern der getesteten Kommunikationsvorrichtung (4), so dass diese den Anruf an die Simulationsbasisstation (3) auslöst, wobei die Simulationsbasisstation (3) so ausgebildet ist, dass sie in einen automatischen Anrufbeantwortungsmodus eintritt.

7. Verfahren nach Anspruch 6, wobei die Anrufqualität mit einer Ähnlichkeit zwischen dem Test-Audio und dem Standard-Audio korreliert.

8. Steuervorrichtung (1), die ein Testsystem steuern kann, das eine Simulationsbasisstation (3), eine getestete Kommunikationsvorrichtung (4), eine Testvorrichtung (2), und die Steuervorrichtung (1) aufweist, aufweisend:
einen Prozessor (722); und
ein nichtflüchtiges maschinenlesbares Speichermedium (732), auf dem von einer Maschine ausführbare Anweisungen gespeichert sind, wobei die von einer Maschine ausführbaren Anweisungen von dem Prozessor ausgeführt werden können und den Prozessor zu Folgendem veranlassen:
Steuern (202), um einen Anruf zwischen der getesteten Kommunikationsvorrichtung (4) und der Simulationsbasisstation (3) zu tätigen, wobei der Anruf dazu verwendet werden kann, das Test-Audio mittels der getesteten Kommunikationsvorrichtung (4) an die Simulationsbasisstation (3) zu übertragen,
wobei das Test-Audio durch Verarbeitung des Standard-Analog-Audios erhalten wird, das von der Testvorrichtung (2) mit der getesteten Kommunikationsvorrichtung (4) bereitgestellt wird; und
Empfangen (204) des Ähnlichkeitsvergleichsergebnisses, das von der Testvorrichtung (2) zurückgegeben wird, um die Anrufqualität der getesteten Kommunikationsvorrichtung (4) zu bestimmen, wobei
die von einer Maschine ausführbaren Anweisungen den Prozessor ferner zu Folgendem veranlassen:
Steuern der getesteten Kommunikationsvorrichtung (4), um den Anruf an die Simulationsbasisstation (3) auszulösen, wobei die Simulationsbasisstation (3) so ausgebildet ist, dass sie in einen automatischen Anrufbeantwortungsmodus eintritt.

9. Steuervorrichtung nach Anspruch 8, wobei die Anrufqualität mit einer Ähnlichkeit zwischen dem Test-Audio und dem Standard-Audio korreliert.

## Revendications

1. Système permettant de tester une qualité d'appel, comprenant :
une station de base de simulation (3) ;
un dispositif de communication testé (4) ;
un dispositif de commande (1), configuré pour transmettre une instruction d'appel au dispositif de communication testé (4)) de telle sorte qu'un appel entre le dispositif de communication testé (4) et la station de base de simulation (3) est établi ;
un dispositif de test (2), configuré pour :
fournir un audio analogique standard au dispositif de communication testé (4) après que l'appel a été établi entre le dispositif de communication testé (4) et la station de base de simulation (3), dans lequel l'audio analogique standard devient un audio de test après qu'il a été traité par le dispositif de communication testé (4) et que l'audio de test a été transmis à la station de base de simulation (3) pendant un processus de transmission par l'intermédiaire de l'appel, et l'audio de test est renvoyé au dispositif de test (2) par la station de base de simulation (3), et l'audio de test n'est pas changé pendant le processus de transmission ; et
mettre en oeuvre une comparaison de similarité entre l'audio de test et l'audio analogique standard pour obtenir un résultat de comparaison de similarité, dans lequel le résultat de comparaison de similarité montre la qualité d'appel du dispositif de communication testé (4),
dans lequel le dispositif de communication testé (4) est configuré pour émettre l'appel vers la station de base de simulation (3) en réponse à l'instruction d'appel, et la station de base de simulation (3) est configurée pour entrer dans un mode de réponse automatique.

2. Système selon la revendication 1, dans lequel :
la station de base de simulation (3) est configurée pour transmettre un message de notification au dispositif de test (2) après que l'appel a été établi ; et
le dispositif de test (2) est configuré pour fournir l'audio standard au dispositif de communication testé (4) en réponse au message de notification.

3. Système selon la revendication 1, dans lequel
le dispositif de communication testé (4) est configuré pour obtenir l'audio de test en utilisant un microphone intégré ou un microphone externe lorsque le dispositif de test (2) joue l'audio standard.

4. Système selon la revendication 1, dans lequel
le dispositif de communication testé (4) est configuré pour traiter l'audio standard reçu et faire de l'audio standard l'audio de test.

5. Système selon la revendication 1, dans lequel le résultat de comparaison de similarité est un score d'opinion moyen, MOS, lorsque le dispositif de test est un dispositif de test de MOS.

6. Procédé de test de qualité d'appel, comprenant :
l'établissement d'un appel entre un dispositif de communication testé (4) et une station de base de simulation (3) ;
la fourniture, par un dispositif de test (2), d'un audio analogique standard au dispositif de communication testé (4) après que l'appel a été établi entre le dispositif de communication testé (4) et la station de base de simulation (3) ;
le traitement de l'audio analogique standard et le fait de faire de l'audio analogique standard un audio de test et la transmission de l'audio de test à la station de base de simulation (3) en utilisant le dispositif de communication testé (4) pendant un processus de transmission par l'intermédiaire de l'appel, et le renvoi de l'audio de test au dispositif de test (2) par la station de base de simulation (3), dans lequel l'audio de test n'est pas changé pendant le processus de transmission ;
la mise en oeuvre, par le dispositif de test (2), d'une comparaison de similarité entre l'audio de test et l'audio standard pour obtenir un résultat de comparaison de similarité dans lequel le résultat de comparaison de similarité montre la qualité d'appel du dispositif de communication testé (4) ; et
la réception du résultat de comparaison de similarité en provenance du dispositif de test (2) pour déterminer la qualité d'appel du dispositif de communication testé (4),
dans lequel l'établissement de l'appel entre le dispositif de communication testé (4) et la station de base de simulation (3) comprend en outre :
la commande du dispositif de communication testé (4) pour émettre l'appel vers la station de base de simulation (3), dans lequel la station de base de simulation (3) est configurée pour entrer dans un mode de réponse automatique.

7. Procédé selon la revendication 6, dans lequel la qualité d'appel est corrélée à une similarité entre l'audio de test et l'audio standard.

8. Dispositif de commande (1) capable de commander un système de test comprenant une station de base de simulation (3), un dispositif de communication testé (4), un dispositif de test (2) et le dispositif de commande (1), comprenant :
un processeur (722), et
un support de stockage non transitoire lisible par machine (732) stockant des instructions exécutables par machine, dans lequel les instructions exécutables par machine sont exécutables par le processeur et amènent le processeur à :
commander (202) pour établir un appel entre le dispositif de communication testé (4) et la station de base de simulation (3), dans lequel l'appel est capable d'être utilisé pour transmettre de l'audio de test à la station de base de simulation (3) par le dispositif de communication testé (4), dans lequel l'audio de test est obtenu par traitement de l'audio analogique standard fourni par le dispositif de test (2) avec le dispositif de communication testé (4) ; et
recevoir (204) le résultat de comparaison de similarité renvoyé par le dispositif de test (2) pour déterminer la qualité d'appel du dispositif de communication testé (4), dans lequel,
les instructions exécutables par machine amènent en outre le processeur à :
commander le dispositif de communication testé (4) pour émettre l'appel vers la station de base de simulation (3), dans lequel la station de base de simulation (3) est configurée pour entrer dans un mode de réponse automatique.

9. Dispositif de commande selon la revendication 8, dans lequel la qualité d'appel est corrélée à une similarité entre l'audio de test et l'audio standard.
